# EUROPÄISCHE PATENTSCHRIFT

(11) **EP 1 188 613 B1**
(45) Veröffentlichungstag und Bekanntmachung des Hinweises auf die Patenterteilung: **25.06.2003**
(21) Anmeldenummer: 00120452.8
(22) Anmeldetag: 19.09.2000
(51) Int. Cl.: B60P 1/44

(54) **Hubladebühne**
Loading tailgate
Hayon élévateur

(43) Veröffentlichungstag der Anmeldung: 20.03.2002
(73) Patentinhaber: Gerd Bär GmbH, 74078 Heilbronn (DE)
(72) Erfinder: Falk, Markus, 74626 Bretzfeld (DE); Engel, Karl-Heinz, 74912 Kirchardt (DE)
(74) Vertreter: KOHLER SCHMID + PARTNER

(56) Entgegenhaltungen:
- DE-A- 3 112 589
- DE-A- 3 531 853

## Beschreibung

Die Erfindung betrifft eine Hubladebühne zur Befestigung an Fahrzeugen, mit mindestens einem im wesentlichen parallelogrammförmigen Hub-/Neigtragwerk zum Heben, Senken und Neigen der Plattform, dessen unterer Parallelogrammlenker an einem das Hub-/Neigtragwerk tragenden Befestigungselement und an der Plattform angelenkt ist.

Derartige Hubladebühnen mit parallelogrammförmigem Hub-/Neigtragwerk sind hinlänglich bekannt.

Dabei werden je nach räumlichen Gegebenheiten am Fahrzeug Hubladebühnen mit jeweils unterschiedlichen Hub-/Neigtragwerk verwendet. Die Anforderungen sin hier konträr. Im einen Fall, charakteristisch sind hier Fahrzeuge mit BDF-Wechselaufbau, ist die gesamte Unterbauhöhe sehr hoch, so daß das Parallelogramm sehr steil nach oben (Winkel α) gestellt werden muß, um diese Höhe zu überbrücken. Im zweiten Fall, charakteristisch sind hier Fahrzeuge mit Tiefkuppeleinrichtung, ist es erforderlich, die Hubladebühne sehr hoch anzubauen, um die Deichselfreiheit zu gewährleisten. Dies bedingt einen relativ steilen Anbauwinkel (Winkel β) nach unten. Je steiler der Anbauwinkel nach oben oder unten gewählt ist, desto geringer wird der wirksame Hebelabstand der Parallelogrammlenker. Die Kräfte dagegen steigen umgekehrt proportional. Daher sind Hub-/Neigtragwerke mit verschiedenen Parallelogrammausbildungen erforderlich, um unterschiedliche Maximallasten heben zu können. Daher hat jeder Hersteller Hubladebühnen mit unterschiedlichem Hub-/Neigtragwerk im Programm, die je nach räumlichen Gegebenheiten an das Fahrzeug angebaut werden. Allerdings bedeuten diese vielen unterschiedlichen Hubladebühnenvarianten eine hohe Teilevielfalt und einen entsprechend umfangreichen Lagerumfang.

Es ist daher die Aufgabe der Erfindung, eine Hubladebühne der eingangs genannten Art derart zu verbessern, daß die Teilevielfalt und der entsprechende Lagerumfang reduziert werden können.

Diese Aufgabe wird erfindungsgemäß dadurch gelöst, daß an jedem Befestigungselement mehrere vorgefertigte Befestigungsstellen für den unteren Parallelogrammlenker vorgesehen sind, um wahlweise Hub-/Neigtragwerke mit unterschiedlichen Parallelogrammen befestigen zu können.

Der mit der Erfindung erzielte Vorteil besteht darin, daß an den verschiedenen Befestigungsstellen wahlweise Hub-/Neigtragwerke mit unterschiedlichen steil aufstellbaren Parallelogrammlenkern und/oder mit Parallelogrammlenkern mit unterschiedlichem Parallelogrammabstand befestigt werden können.

Vorzugsweise sind an der Plattform mehrere vorgefertigte Befestigungsstellen für den unteren Parallelogrammlenker vorgesehen, wobei an jedem Befestigungselement und/oder an der Plattform jeweils mindestens zwei etwa senkrecht voneinander beabstandete und/oder jeweils etwa waagerecht nebeneinander vorgesehen sein können. In einer bevorzugten Ausführungsform der Erfindung sind an jedem Befestigungselement und/oder an der Plattform jeweils drei vorgefertigte Befestigungsstellen in Dreieckanordnung vorgesehen.

Die Erfindung kann bei Hubladebühnen mit nur einem Hub-/Neigtragwerk wie auch bei Hubladebühnen mit zwei parallel nebeneinander angeordneten Hub-/Neigtragwerken eingesetzt werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine Seitenansicht der erfindungsgemäßen Hubladebühne mit einem ersten Hub-/Neigtragwerk, wobei die Plattform sowohl in ihrer maximal angehobenen Stellung als auch in einer abgesenkten Stellung gezeigt ist;
- Fig. 2: die in Fig. 1 gezeigte Hubladebühne mit einem zweiten Hub-/Neigtragwerk; und
- Fig. 3: die in Fig. 1 gezeigte Hubladebühne mit einem dritten Hub-/Neigtragwerk.

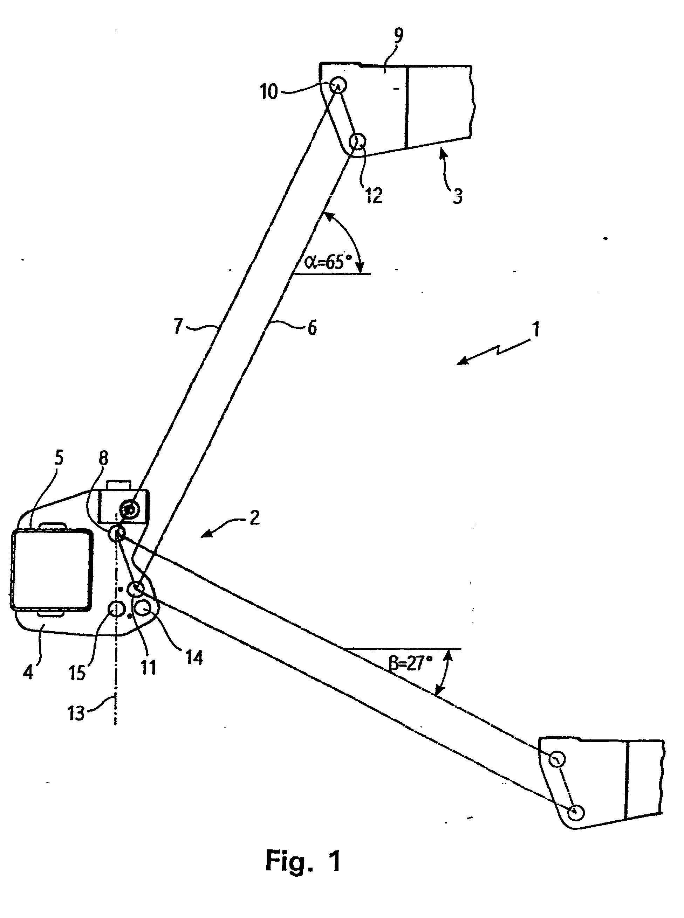

Die in Fig. 1 in Befestigungslage am Fahrzeug gezeigte Hubladebühne **1** umfaßt zwei parallel nebeneinander angeordnete, parallelogrammförmige Hub-/Neigtragwerke **2** zum Heben, Senken und Neigen einer Plattform **3**, wobei in der Seitenansicht der Fig. 1 das hintere Hub-/Neigtragwerk 2 durch das vordere verdeckt ist. Jedes Hub-/Neigtragwerk 2 ist jeweils über ein Befestigungselement **4** an einem Tragrohr **5** befestigt, mit dem die Hubladebühne 1 am Fahrzeug befestigt wird. Jedes Hub-/Neigtragwerk 2 umfaßt zwei Parallelogrammlenker **6**, **7**, wobei der obere Parallelogrammlenker **7** am Befestigungselement 4 bei **8** und an einem Anschlußkopf **9** der Plattform 3 bei **10** angelenkt ist. Der untere Parallelogrammlenker **6** ist am Befestigungselement **4** bei **11** und am Anschlußkopf 9 bei **12** angelenkt. Diese als Löcher ausgebildeten Befestigungsstellen 8, 10, 11, 12 bilden zusammen ein Parallelogramm, wodurch die mittels eines Hubzylinders (nicht gezeigt) höhenverfahrbare Plattform 3 beim Heben und Senken waagerecht gehalten wird. Indem die Länge eines der beiden Parallelogrammlenker 6, 7 mittels eines Neigzylinders (nicht gezeigt) gegenüber dem anderen Parallelogrammlenker verändert wird, kann die Plattform 3 abgeneigt werden, bis ihre Plattformspitze auf den Boden aufsetzt.

Der Bewegungsablauf der Plattform 3 beim Heben und Senken wird durch die relative Lage der beiden Befestigungsstellen 8, 11 der Parallelogrammlenker 6, 7 am Befestigungselement 4 zueinander festgelegt. Der Parallelogrammabstand der Parallelogrammlenker 6, 7 verringert sich mit wachsendem Hub der Plattform 3, d.h., die vom Hubzylinder aufzubringenden und von den Parallelogrammlenkern 6, 7 aufzunehmenden Kräfte werden mit abnehmendem Parallelogrammabstand beider Parallelogrammlenker 6, 7 stetig größer. Daher gibt es, abhängig von der jeweiligen Lage der beiden Befestigungsstellen 8, 11 zueinander, jeweils einen minimalen Parallelogrammabstand, der aus Belastungsgründen nicht unterschritten werden darf. Je größer der Abstand zwischen den beiden am Befestigungselement 4 vorgesehenen Befestigungsstellen 8, 11 und entsprechend den beiden am Anschlußkopf 9 vorgesehenen Befestigungsstellen 10, 12 ist, desto geringer sind die erforderlichen Kräfte. Je weiter die am Befestigungselement 4 vorgesehene Befestigungsstelle 11 des unteren Parallelogrammlenkers 6, bezogen auf die durch die Befestigungsstelle 8 des oberen Parallelogrammlenkers 7 gehende Vertikale **13**, winkelmäßig von der Befestigungsstelle 8 entgegen dem Uhrzeigersinn versetzt angeordnet ist, desto höher kann die Plattform 3 angehoben werden bzw. desto steiler können die Parallelogrammlenker 6, 7 hochstehen, bis der minimale Parallelogrammabstand erreicht wird. Bei dem Hub-/Neigtragwerk 2 beträgt, jeweils bezogen auf die Horizontale, der Anbauwinkel α nach oben 65° und der Anbauwinkel β nach unten 27°.

Um am Befestigungselement 4 wahlweise Hub-/Neigtragwerke mit unterschiedlichen Parallelogrammen, d.h. mit unterschiedlichen steil hochstehenden Parallelogrammlenkern 6, 7, befestigen zu können, sind am Befestigungselement 4 noch zwei weitere Befestigungsstellen **14, 15** zur wahlweisen Befestigung des unteren Parallelogrammlenkers 6 vorgesehen. Dabei ist die Befestigungsstelle 11 von der Befestigungsstelle 8 weniger weit beabstandet als die beiden Befestigungsstellen 14, 15, die etwa gleich weit beabstandet sind. Die Befestigungsstelle 15 ist, bezogen auf die Befestigungsstelle 8, winkelmäßig entgegen dem Uhrzeigersinn weniger weit von der durch die Befestigungsstelle 8 gehenden Vertikalen 13 entfernt als die beiden Befestigungsstellen 11, 14, die winkelmäßig gleich weit versetzt sind.

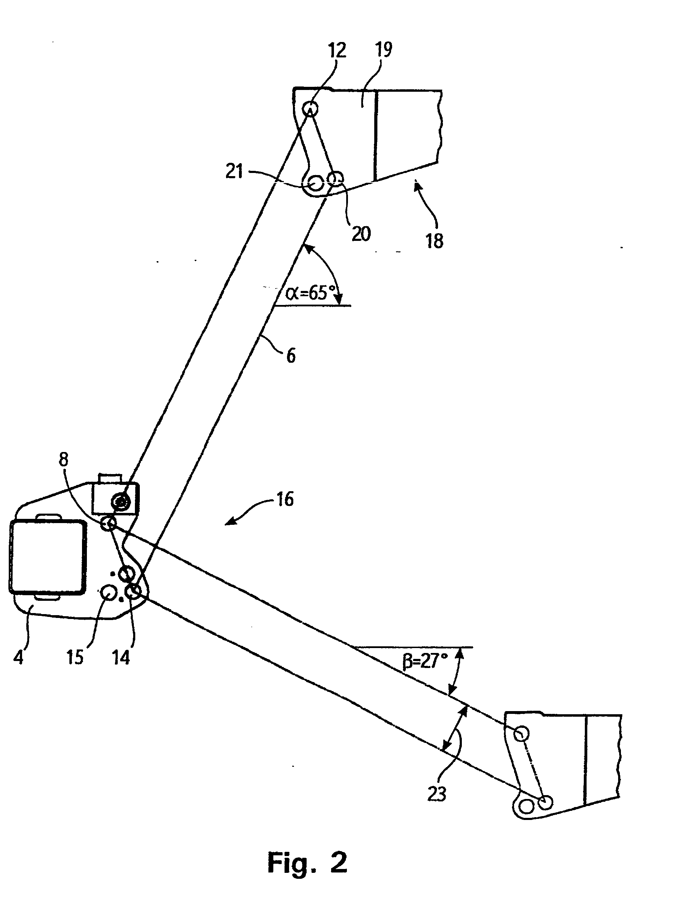

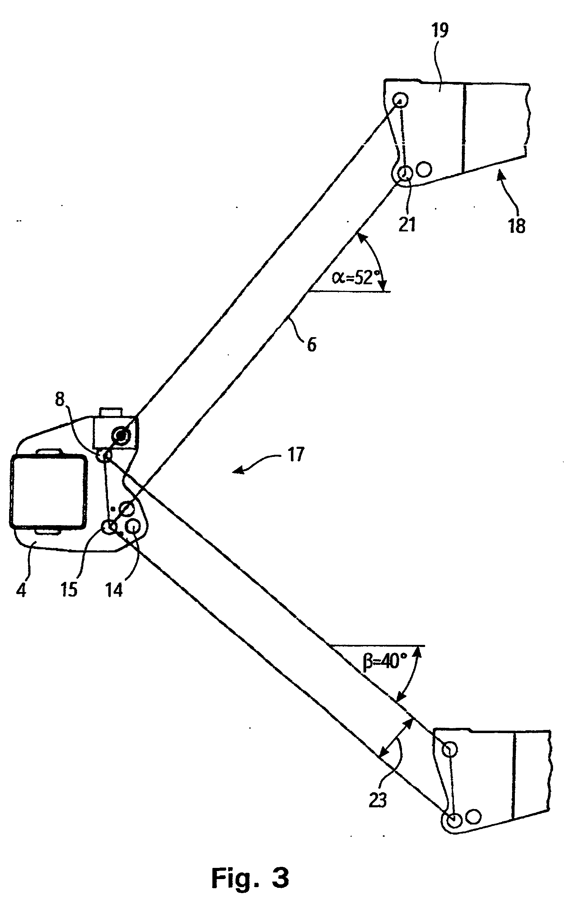

In **Fig. 2** und **Fig. 3** sind jeweils zwei andere Hub-/Neigtragwerke **16** und **17** mit einer anderen Plattform **18** gezeigt, in deren modifiziertem Anschlußkopf **19** zwei Befestigungsstellen **20, 21** zur wahlweisen Befestigung des unteren Parallelogrammlenkers 6 vorgesehen sind. Dabei entspricht der Abstand der beiden Befestigungsstellen 20, 21 zur Befestigungsstelle 12 jeweils dem Abstand der beiden Befestigungsstellen 14, 15 zur Befestigungsstelle 8.

Bei dem Hub-/Neigtragwerk 16 der Fig. 2 ist der untere Parallelogrammlenker 6 am Anschlußkopf 19 in der Befestigungsstelle 20 und am Befestigungselement 4 in der Befestigungsstelle 14 angelenkt, so daß der gleich steile Winkel der Parallelogrammlenker 6, 7 wie bei Fig. 1 erreicht wird. Aufgrund des größeren Abstands zwischen den Befestigungsstellen 8 und 14 kann das Hub-/Neigtragwerk 16 ein höheres Gewicht, d.h. eine schwerere Plattform, als das Hub-/Neigtragwerk 2 tragen. Bei dem Hub-/Neigtragwerk 16 beträgt der Anbauwinkel α nach oben 65° und der Anbauwinkel β nach unten 27°.

Bei dem Hub-/Neigtragwerk 17 der Fig. 3 ist der untere Parallelogrammlenker 6 am Anschlußkopf 19 in der Befestigungsstelle 21 und am Befestigungselement 4 in der Befestigungsstelle 15 angelenkt, so daß ein weniger steiler Winkel der Parallelogrammlenker 6, 7 als bei Fig. 2 erreicht wird. Aufgrund des etwa gleichen Abstands der Befestigungsstellen 14, 15 zur Befestigungsstelle 8 kann das Hub-/Neigtragwerk 17 bei gleichem rechtwinkligem Abstand **23** des Parallelogrammlenker 6, 7 das gleiche Gewicht wie das Hub-/Neigtragwerk 16 tragen. Bei dem Hub-/Neigtragwerk 17 beträgt der Anbauwinkel α nach oben 52° und der Anbauwinkel β nach unten 40°.

## Patentansprüche

1. Hubladebühne (1) zur Befestigung an Fahrzeugen, mit mindestens einem im wesentlichen parallelogrammförmigen Hub-/Neigtragwerk (2; 16; 17) zum Heben, Senken und Neigen der Plattform (3), dessen unterer Parallelogrammlenker (6) an einem das Hub-/Neigtragwerk (2; 16; 17) tragenden Befestigungselement (4) und an der Plattform (3) angelenkt ist,
**dadurch gekennzeichnet,**
**daß** an jedem Befestigungselement (4) mehrere vorgefertigte Befestigungsstellen (11, 14, 15) für den unteren Parallelogrammlenker (6) vorgesehen sind, um wahlweise Hub-/Neigtragwerke (2; 16; 17) mit unterschiedlichen Parallelogrammen befestigen zu können.

2. Hubladebühne nach Anspruch 1, **dadurch gekennzeichnet, daß** an der Plattform (3) mehrere vorgefertigte Befestigungsstellen (20, 21) für den unteren Parallelogrammlenker (6) vorgesehen sind.

3. Hubladebühne nach Anspruch 1 oder 2, **dadurch gekennzeichnet, daß** an jedem Befestigungselement (4) und/oder an der Plattform (3) jeweils mindestens zwei vorgefertigte Befestigungsstellen (14, 15; 20, 21) etwa waagerecht nebeneinander vorgesehen sind.

4. Hubladebühne nach einem der vorhergehenden Ansprüche, **dadurch gekennzeichnet, daß** an jedem Befestigungselement (4) und/oder an der Plattform (3) jeweils mindestens zwei etwa senkrecht voneinander beabstandete vorgefertigte Befestigungsstellen (11, 14; 11, 15) vorgesehen sind.

5. Hubladebühne nach einem der vorhergehenden Ansprüche, **dadurch gekennzeichnet, daß** an jedem Befestigungselement (4) und/oder an der Plattform (3) jeweils drei vorgefertigte Befestigungsstellen (11, 14, 15) in Dreieckanordnung vorgesehen sind.

6. Hubladebühne nach einem der vorhergehenden Ansprüche, **dadurch gekennzeichnet, daß** zwei Hub-/Neigtragwerke (2; 16; 17) parallel nebeneinander angeordnet und jeweils von einem Befestigungselement (4) getragen sind.

## Claims

1. Lifting loading gate (1) for fixing to vehicles, with at least one essentially parallelogram-shaped lifting/tilting support structure (2; 16; 17) for lifting, lowering and tilting the platform (3), the lower parallelogram link (6) of which is pivotally connected to a fixing element (4), which supports the lifting/tilting support structure (2; 16; 17), and to the platform (3), **characterised in that** a plurality of pre-produced fixing points (11, 14, 15) for the lower parallelogram link (6) is provided on each fixing element (4) to enable lifting/tilting support structures (2; 16; 17) with different parallelograms to be fixed as desired.

2. Lifting loading gate according to Claim 1, **characterised in that** a plurality of pre-produced fixing points (20, 21) for the lower parallelogram link (6) is provided on the platform (3).

3. Lifting loading gate according to Claim 1 or 2, **characterised in that** at least two pre-produced fixing points (14, 15; 20, 21) are provided approximately horizontally next to one another on each fixing element (4) and/or on the platform (3).

4. Lifting loading gate according to one of the preceding claims, **characterised in that** at least two pre-produced fixing points (11, 14; 11, 15) spaced apart approximately vertically are provided on each fixing element (4) and/or on the platform (3).

5. Lifting loading gate according to one of the preceding claims, **characterised in that** at least three pre-produced fixing points (11, 14, 15) in a triangular arrangement are provided on each fixing element (4) and/or on the platform (3).

6. Lifting loading gate according to one of the preceding claims, **characterised in that** two lifting/tilting support structures (2; 16; 17) are arranged in parallel next to one another and each is supported by a fixing element (4).

## Revendications

1. Hayon élévateur (1) pour la fixation à des véhicules, comprenant au moins un appareil porteur de levée/inclinaison (2, 16, 17) essentiellement en forme de parallélogramme pour lever, abaisser et incliner la plate-forme (3), dont le bras oscillant inférieur du parallélogramme (6) est fixé avec articulation à un élément de fixation (4) qui porte l'appareil porteur de levée/inclinaison (2, 16, 17), ainsi qu'à la plate-forme (3), **caractérisé en ce que**, sur chaque élément de fixation, plusieurs points de fixation préfabriqués (11, 14, 15) sont prévus pour le bras oscillant inférieur du parallélogramme (6) afin de pouvoir fixer au choix les appareils porteurs de levée/inclinaison (2, 16, 17) avec différents parallélogrammes.

2. Hayon élévateur selon la revendication 1, **caractérisé en ce que**, sur la plate-forme (3), plusieurs points de fixation préfabriqués (20, 21) sont prévus pour le bras oscillant inférieur du parallélogramme (6).

3. Hayon élévateur selon l'une ou l'autre des revendications 1 et 2, **caractérisé en ce que**, sur chaque élément de fixation (4) et/ou sur la plate-forme (3), au moins deux points de fixation préfabriqués (14, 15 20, 21) sont prévus respectivement l'un à côté de l'autre, à peu près à l'horizontale.

4. Hayon élévateur selon l'une des revendications précédentes, **caractérisé en ce que**, sur chaque élément de fixation (4) et/ou sur la plate-forme (3), au moins deux points de fixation préfabriqués (11, 14, 11, 15) sont prévus respectivement à distance l'un de l'autre, à peu près à la verticale.

5. Hayon élévateur selon l'une des revendications précédentes, **caractérisé en ce que**, sur chaque élément de fixation (4) et/ou sur la plate-forme (3), trois points de fixation préfabriqués (11, 14, 15) sont prévus avec un agencement en triangle.

6. Hayon élévateur selon l'une des revendications précédentes, **caractérisé en ce que** deux appareils porteurs de levée/inclinaison (2, 16, 17) sont agencés parallèlement l'un à l'autre et sont portés respectivement par un élément de fixation (4).
